# EUROPÄISCHE PATENTSCHRIFT

(11) **EP 0 925 109 B1**
(45) Veröffentlichungstag und Bekanntmachung des Hinweises auf die Patenterteilung: **01.04.2009**
(21) Anmeldenummer: 98929189.3
(22) Anmeldetag: 03.07.1998
(51) Int. Cl.: B01J 19/32

(54) **EINBAUTEN FÜR STOFFAUSTAUSCHKOLONNEN**
PACKING FOR MATERIAL EXCHANGE COLUMNS
CHICANES POUR COLONNES D'ECHANGE DE SUBSTANCE

(30) Priorität: 04.07.1997 CH 163897
(43) Veröffentlichungstag der Anmeldung: 30.06.1999
(73) Patentinhaber: KÜHNI AG, CH-4123 Allschwil (CH)
(72) Erfinder: BÜHLMANN, Ulrich, CH-4105 Biel-Benken (CH)
(74) Vertreter: Roshardt, Werner Alfred
(86) Internationale Anmeldenummer: PCT/CH1998/000293
(87) Internationale Veröffentlichungsnummer: WO 1999/001215

(56) Entgegenhaltungen:
- WO-A-97/16247
- DE-A- 19 524 928
- DE-B- 1 086 215
- GB-A- 1 005 586
- US-A- 4 481 105
- US-A- 4 842 778
- US-A- 5 523 062
- SOVIET PATENTS ABSTRACTS Section Ch, Week 922826. August 1992 Derwent Publications Ltd., London, GB; Class J01, AN 92-232401 XP002057599 in der Anmeldung erwähnt & SU 1 681 924 A (A.V. STYTSENKO) 7. Oktober 1991
- SOVIET PATENTS ABSTRACTS Section Ch, Week 86318. August 1986 Derwent Publications Ltd., London, GB; Class J01, AN 86-203431 XP002057600 & SU 1 200 952 A (PLASTICS SYNTH. RESI.) 30. Dezember 1985

## Beschreibung

### Technisches Gebiet

Die vorliegende Erfindung betrifft Einbauten für Stoffaustauschkolonnen, auch Kolonneneinbauten genannt. Insbesondere betrifft die Erfindung Einbauten, die dem Stoffaustausch zwischen einer flüssigen und einer gas- bzw. dampfförmigen Phase dienen und für Stoffaustauschkolonnen mit wenigstens einem Packungsbett dienen, welches mindestens einen ersten Packungsblock mit Packungselementen eines ersten Packungstyps mit einer ersten systematischen Maldistribution und mindestens ein ihm zugeordnetes Korrekturelement aufweist. Weiter bezieht sich die Erfindung auf eine Stoffaustauschkolonne mit solchen Einbauten und eine Verwendung eines Packungsblocks.

### Stand der Technik

Kolonneneinbauten finden sowohl in der thermischen Trenntechnik als auch in der Mischtechnik für den Stoff- und Wärmeaustausch zwischen zwei fluiden Phasen vielfältige Anwendungen. Sie sind als Trenn- oder Mischeinbauten in Kolonnen und ähnliche Einrichtungen einbaubar, welche u.a. für die Destillation, Rektifikation, Sorption, Reaktion oder Extraktion verwendet werden. Beim Wärme- und Stoffaustausch zwischen einer flüssigen und einer gas- bzw. dampfförmigen Phase besteht der Zweck der Einbauten darin, sowohl das Gas resp. den Dampf als auch die Flüssigkeit, die entweder entgegen der Richtung der Gas- bzw. Dampfströmung oder in gleicher Richtung wie diese durch die Kolonne hindurch strömt, gleichmässig über den Kolonnenquerschnitt zu verteilen und eine möglichst grosse Flüssigkeitsoberfläche für den Stoff- und Wärmeaustausch zu schaffen. Als Kolonneneinbauten werden Böden und/oder Packungen verwendet. Gegenüber den klassischen Bodenkolonnen bieten gepackte Kolonnen, d.h. Kolonnen, deren Einbauten aus Packungen bestehen, insbesondere Vorteile hinsichtlich des Druckverlustes über die Kolonne, des Durchsatzes und damit auch der geringen thermischen Beanspruchung empfindlicher Stoffe. In Bezug auf die Investitionskosten sind gepackte Kolonnen im Vergleich zu Bodenkolonnen aufgrund des kleineren erforderlichen Bauvolumens meist deutlich günstiger.

Als Packungen für Stoffaustauschkolonnen finden neben sogenannten Füllkörperschüttungen (auch regellose Schüttungen genannt) in zunehmendem Masse strukturierte Packungen (auch geordnete Packungen genannt) Verwendung. Bei der Verwendung in Destillationskolonnen weisen strukturierte Packungen gegenüber Füllkörperschüttungen vor allem Vorteile auf in Bezug auf die Trennleistung und die Massstabvergrösserung zu Kolonnen mit grossen Durchmessern.

Die strukturierten Packungen sind aufgrund ihrer Struktur weiter unterteilbar in einen Typ "gefaltete Oberfläche" und in einen Typ "Gitterpackung". Packungen vom Typ gefaltete, Oberfläche weisen zick-zack förmig gefaltete Bleche, sogenannte plissierte Matten auf, die als achsenparallele Einbauten in die Kolonnen eingebracht sind, und sie prägen durch ihre Struktur der Gas- bzw. Dampfströmung sowie der Flüssigkeitsströmung für jeweils ein Packungselement nur eine in der Querschnittprojektion der Kolonne erkennbare Vorzugsrichtung auf. Eine typische strukturierte Packung vom Typ gefaltete Oberfläche ist in DE 26 01 890 dargestellt.

Demgegenüber weisen strukturierte Packungen vom Typ Gitterpackung eine gitterförmige, offene Struktur auf und die Gitterelemente (Lamellen oder Teilflächen) sind in netz-, gitter- oder ventilatorartiger Form angeordnet. Die Gitterelemente hängen an Kreuz- oder Knotenstellen zusammen, wobei Anordnungen in zwei- oder dreidimensionalen Formen möglich sind. Strukturierte Packungen vom Typ Gitterpackung können durch ihre Struktur der Gas- bzw. Dampfströmung und/oder der Flüssigkeitsströmung für jeweils ein Packungselement mehr als eine in der Querschnittprojektion der Kolonne erkennbare Vorzugsrichtung aufprägen. Bei einer geeigneten Ausgestaltung resp. Strukturierung der Gitterpackung können zum Aufbau dieses Packungstyps auch plissierte Matten verwendet werden. Eine typische strukturierte Packung vom Typ Gitterpackung ist die in EP 069 241 beschriebene Packung, die unter dem Markennamen "Rombopak" vertrieben wird.

Strukturierte Packungen vom Typ gefaltete Oberfläche weisen gegenüber solchen vom Typ Gitterpackung den Vorteil einer einfacheren Fertigungsweise der Packung auf. Dem steht allerdings der Nachteil gegenüber, dass bei den strukturierten Packungen vom Typ gefaltete Oberfläche aufgrund der zusammenhängenden Oberfläche (geschlossene Struktur) im Vergleich zu den Gitterpackungen eine geringere Benetzung der Packungsoberfläche und damit auch eine kleinere Flüssigkeitsoberfläche für den Stoff- und Wärmeaustausch erreicht wird. Deshalb kann mit strukturierten Packungen vom Typ Gitterpackung ausgerüsteten Trennkolonnen eine grössere Effizienz in der Trennleistung erzielt werden als mit Trennkolonnen, die mit Packungen vom Typ gefaltete Oberfläche ausgerüstet sind.

In Anwendungsfällen mit, hohen Reinheitsanforderungen stösst der Einsatz von gepackten Rektifikationskolonnen in der industriellen Praxis allerdings noch auf Widerstand, da sowohl für Füllkörperschüttungen als auch für strukturierte Packungen das. Problem der Maldistribution insbesondere der flüssigen Phase auftritt. Die Maldistribution manifestiert sich dadurch, dass eine anfänglich gleichmässig über den Querschnitt der Kolonne verteilte Flüssigkeitsströmung nach dem Durchgang durch die Packung hindurch eine ungleichmässige Flüssigkeitsendverteilung aufweist. Die Güte der Trennwirkung hängt jedoch von der Gleichmässigkeit der Verteilung von Gas bzw. Dampf und Flüssigkeit über den gesamten Querschnitt des Kolonneninnenraums längs des Strömungsweges und der Intensität deren Durchmischung ab. Die auftretenden Ungleichverteilungen in den Flüssigkeits- und Dampfströmen können in zwei verschiedene Arten von Maldistribution unterteilt werden. Die stochastische Maldistribution bezeichnet eine kleinräumige, (zufällige) Ungleichverteilung. Über grössere Flächenbereiche ist die Verteilung jedoch ausgeglichen. Die systematische Maldistribution charakterisiert hingegen eine in Bezug auf den Kolonnenquerschnitt grossflächige Fehlverteilung. In der industriellen Realität ist der systematischen immer auch eine stochastische Maldistribution überlagert.

Eine spezielle Form der stochastischen Maldistribution ist eine ungenügende, nur grobe Vorverteilung der Flüssigkeit oberhalb eines Packungsbettes. Grossflächig ist der Flüssigkeitsstrom gleichmässig verteilt, nämlich in eine bestimmte Anzahl gleicher und gleichmässig verteilter Flüssigkeitsteilströme, erzeugt durch den eingesetzten Flüssigkeitsverteiler. Kleinflächig tritt jedoch eine Ungleichverteilung auf, nämlich Flächenbereiche ohne Flüssigkeitszufuhr und solche, wo ein Flüssigkeitsstrom des Verteilers auftritt. Diese Art der stochastischen Maldistribution in der Form einer ungenügenden Vorverteilung der Flüssigkeit lässt sich durch aufwendige Verteiler oder zusätzliche Verteilhilfen verbessern.

Nach DE 44 18 488 ist es bekannt, dass sich im Bereich der Kolonnenwand eine verstärkte Strömung von Flüssigkeit und Dampf einstellt, die sogenannte Randgängigkeit als spezielle Form einer systematischen Maldistribution, da die Randschicht der Füllkörperschüttung bzw. Packung einen geringeren Widerstand bietet. In diesen Bereichen nimmt die Flüssigkeit daher nur unzureichend am Stoffaustausch teil. Gemäss dem Artikel "Probleme und Erfahrungen bei grosstechnischen Packungskolonnen, Chem.-Ing.-Tech. 64 (1992), Nr. 1, s. 6-16" von Martin Gann et al. weisen strukturierte Packungen aufgrund ihrer Struktur zwar ein geringeres Risiko der systematischen Maldistribution auf als Füllkörperschüttungen, trotzdem sind sie jedoch nicht, wie früher angenommen, selbstverteilend.

Für die Trennwirkung ist besonders die systematische Maldistribution in der Flüssigkeits- und Dampfströmung schädlich, da eine ausgleichende Durchmischung über den Kolonnenquerschnitt nicht gewährleistet ist. Bei der stochastischen Maldistribution hingegen kann eine mehr oder weniger ausgeprägte Quervermischung den negativen Einfluss laufend ausgleichen und kompensieren.

Wie u.a. auch aus DE 44 18 488 hervorgeht, wird von Packungsherstellern als gebräuchliche Abhilfe gegen die Maldistribution eine mehrfache Sammlung der Flüssigkeit und ihre Wiederverteilung über Zwischenverteiler empfohlen. Dazu wird die Packung in mehrere Betten unterteilt, zwischen denen die Flüssigkeitssammler und Zwischenverteiler angeordnet werden. Diese Massnahme ist sinnvoll für beide erwähnten Arten von Maldistribution, vorwiegend jedoch zur Elimination einer systematischen Maldistribution. Bei der Verwendung von Flüssigkeitssammlern und Verteilern haben sich jedoch ihre Kosten und die vergrösserte Bauhöhe der Kolonnen als nachteilig erwiesen.

Zur Vermeidung der erwähnten aufwendigen Sammler und Zwischenverteiler wurde schon versucht, Verteilelemente einzusetzen, die die Funktion sowohl des Sammelns als auch des Wiederverteilens der Flüssigkeit beinhalten. US 5,523,062A (Chemical Research & Licencing Company) befasst sich mit einem solchen, zur gleichförmigen Wiederverteilung der Gas- und Flüssigkeitsströmung in einer katalytischen Destillationskolonne geeigneten kombinierten Verteilelement. Das zick-zack förmige Verteilelement liegt quer zwischen den Packungselementen, wobei Durchflussöffnüngen für das Gas und die Flüssigkeit ausschliesslich in den Spitzen der Zick-Zack Struktur angeordnet sind. Es hat sich jedoch gezeigt, dass solche kombinierte Wiederverteiler nicht sehr wirkungsvoll sind. Einerseits wird die Flüssigkeit nicht vollständig durchmischt, andererseits lässt sich auch nur eine annähernd gleichmässige Verteilung kaum erreichen:

Zur Verbesserung und zum Ausgleich der stochastischen Maldistribution wurde schon vorgeschlagen, Verteilelemente an den beiden Begrenzungen eines Packungsbettes (oben und unten), aber auch zwischen den Packungsbetten anzuordnen:
- In US 4,842,778 A (Glitsch Inc.) wird vorgeschlagen, am oberen und unteren Ende eines Packungsbettes je drei Verteilelemente geringer Höhe anzuordnen, deren primäre Funktion in einer Verbesserung der Anfangsverteilung für die Gas- und Flüssigkeitsströmung besteht. Die Verteilelemente bestehen aus dem Packungstyp "gefaltete Oberfläche". Sie können auch innerhalb eines Packungsbettes angeordnet werden zur Verstärkung einer gleichmässigen und vereinten Verteilung von Flüssigkeit und Dampf. Mit der Anordnung einer Vielzahl von Verteilelementen wird sogar die Elimination der separaten Flüssigkeits- und Dampfverteiler angestrebt.
- In SU 1 681 924 A (Stytsenko) wird gelehrt, zur Vergleichsmässigung der Flüssigkeitsströmung ein oder mehrere Verteilelemente (bzw. Umverteilungspakete) zu Beginn einer Packung unmittelbar nach dem Flüssigkeitsverteiler, aber auch innerhalb eines Packungsbettes anzuordnen. Bezweckt wird damit eine sekundäre Verteilung der Flüssigkeit nach dem Verteiler bzw. die Vermeidung von lokalen Ungleichmässigkeiten (stochastische Maldistribution). Auch hier handelt es sich sowohl bei der Packung als auch den Umverteilungspaketen um den Packungstyp "gefaltete Oberfläche".

In DE 44.18 488 wird als verbesserte Lösung zur Überwindung des Problems der systematischen Maldistribution insbesondere in Form der Randgängigkeit ein Verfahren und eine Vorrichtung vorgeschlagen, bei denen über dem Kolonnenquerschnitt eine gezielte Ungleichverteilung der Flüssigkeitsberieselungsdichte durch eine entsprechende Ausgestaltung des Flüssigkeitsverteilers eingestellt wird, um die durch das nachfolgende Packungsbett verursachte systematische Maldistribution der flüssigen Phase zu kompensieren. Eingehende Untersuchungen und zahlreiche Versuche durch die Anmelderin der vorliegenden Erfindung haben jedoch gezeigt, dass durch die Lösung gemäss DE 44 18 488 das Problem der systematischen Maldistribution nicht gelöst, sondern nur lokal verschoben wird. Während ohne gezielte Ungleichverteilung der Flüssigkeitsberieselungsdichte am oberen Ende eines Packungsbettes die Gleichmässigkeit der Flüssigkeitsverteilung oben gut und unten schlecht ist, bewirkt die gezielte Ungleichverteilung der Flüssigkeitsberieselungsdichte, dass nun die Gleichmässigkeit der Flüssigkeitsverteilung oben schlecht und unten gut ist.

In WO 97/16247 A (Sulzer) wird gelehrt, zur Reduktion des Druckverlustes in der Dampfströmung benachbarte Packungselemente in einem Abstand voneinander anzuordnen und im Zwischenraum zwischen benachbarten Packungselementen sogenannte Fluid-Leitmittel anzuordnen. Bezweckt wird damit lediglich ein kontrolliertes Abfliessen der Flüssigkeit und Hinleiten zur nächsten darunterliegenden Packung. Insbesondere soll ein Ansammeln der Flüssigkeit am unteren Packungsrand der jeweils oberen Packung und eine allfällig dadurch erzeugte Fehlverteilung vermieden werden.

Nach dem weiter oben erwähnten Artikel von Martin Gann et al. verschärft sich das Problem der systematischen Maldistribution bei Packungen beim sogenannten "Scale up", d.h. bei der Vergrösserung der Kolonnen vom Labor- oder Pilotmassstab zu einem grosstechnischen Massstab, weil sowohl den Füllkörperschüttungen als auch den strukturierten Packungen die exakt definierte Flüssigkeitsführung, wie sie klassische Kolonnenböden aufweisen, fehlt. Beim "Scale up" von der Labor- resp. Pilotkolonne zur grosstechnischen Rektifikationskolonne bereitet besonders die Abschätzung der Trennleistung von Füllkörperschüttungen Schwierigkeiten, weil in der Regel hier andere Füllkörperabmessungen eingesetzt werden. Bei strukturierten Packungen ist das Problem zwar vermindert, grundsätzlich aber immer noch vorhanden.

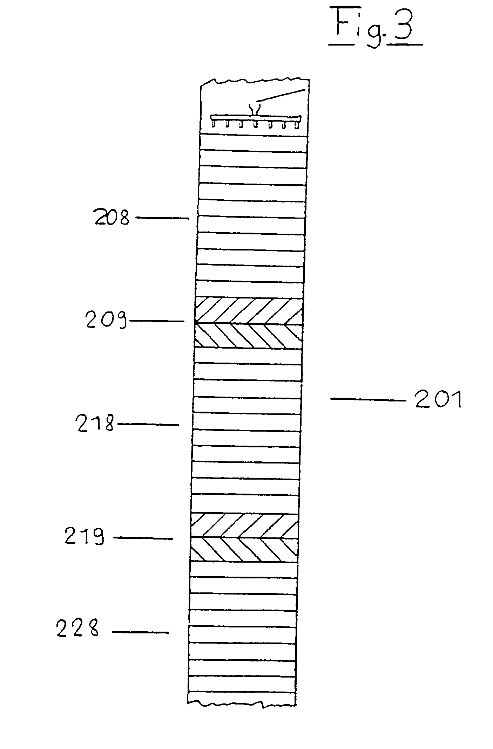

Bei der Kolonne gemäss der US 4,481,105 befindet sich im Reaktor ein Packungsmaterial, in welchem zwei Verteilergitter angeordnet sind. Das Verteilergitter ist z.B. ein Drahtgitter. Bei der DE 1 086 215 sind in der mit Füllkörpern befüllten Kolonne mehrere Verteilerbleche eingebaut, welche die Füllkörperschichten trennen. Beispiele für die Verteilerbleche sind in den Fig. 3 bis 6 gezeigt.

### Darstellung der Erfindung

Aufgabe der vorliegenden Erfindung ist die Bereitstellung von Einbauten für Stoffaustauschkolonnen, durch welche die Nachteile in Verbindung mit dem bei bisher bekannten Packungen auftretenden Phänomen der systematischen Maldistribution umgangen werden und welche somit hohe Packungsbetten mit hoher Trennleistung erlauben.

Die Lösung der Aufgabe ist Gegenstand des Patentanspruchs 1.

Die erfindungsgemässen Einbauten für Stoffaustauschkolonnen bestehen aus wenigstens einem Packungsbett, das mindestens einen ersten Packungsblock mit Packungselementen eines ersten Packungstyps mit einer ersten systematischen Maldistribution und mindestens ein ihm zugeordnetes Korrekturelement aufweist. Das Korrekturelement besteht aus mindestens einem weiteren Packungsblock mit Packungselementen eines zweiten Packungstyps mit einer zweiten systematischen Maldistribution, wobei dieser erste Packungsblock und der weitere Packungsblock von unterschiedlichem Packungstyp sind. Der erste Packungsblock und sein zugeordnetes Korrekturelement erzeugen unterschiedliche Flüssigkeitsendverteilungen, d.h. unterschiedliche systematische Maldistributionen und der Packungsblock sowie sein zugeordnetes Korrekturelement sind so angeordnet und ausgewählt, dass die durch den Packungsblock verursachte systematische Maldistribution der flüssigen Phase durch diejenige des zugeordneten Korrekturelementes mindestens teilweise korrigiert wird.

Die Erfindung beruht einerseits auf der bekannten Tatsache, dass sich bei Kolonnenpackungen (insbesondere bei Füllkörperschüttungen, aber auch bei den strukturierten Packungen) nach einer bestimmten Packungshöhe eine charakteristische Verteilung für die Flüssigkeit einstellt, die sich wohl im Ausmass noch verändern kann, nicht aber in ihrem grundlegenden Muster (für Kolonnenpackung charakteristische Endverteilung). Mit der eingangs eingeführten Terminologie handelt es sich bei der charakteristischen Endverteilung um die systematische Maldistribution Andrerseits geht die Erfindung von der neuen Erkenntnis aus, dass sich entgegen der bisher in der Fachwelt verbreiteten Meinung bei strukturierten Packungen vom Typ Gitterpackung im Bereich der Kolonnenwand nicht eine verstärkte Flüssigkeitsströmung wie bei anderen Packungstypen, eine sogenannte Randgängigkeit, sondern eine abgeschwächte Flüssigkeitsströmung, eine sogenannte Randverarmung, einstellt.

In der nachfolgenden Beschreibung und den Patentansprüchen werden für die verschiedenen Teile der Kolonneneinbauten verschiedene Begriffe verwendet, deren Bedeutung nachstehend zur Klarstellung und gegenseitigen Abgrenzung erläutert wird:
- Als Packungselement wird ein im allgemeinen zylindrisches Element der Packung mit dem Durchmesser der Kolonne bezeichnet, das üblicherweise in Standardhöhen von 200 bis 250 mm hergestellt wird.
- Mit Packungsblock wird eine Abfolge aus mehreren unmittelbar übereinander angeordneten Packungselementen des gleichen Typs bezeichnet. Im Gegensatz zum weiter unten definierten Packungsbett ist ein Packungsblock nicht durch Packungselemente eines anderen Typs oder durch Leitelemente für Flüssigkeit unterbrochen.
- Unter Packungstyp ist der (einheitliche) Typ eines Packungsblocks oder eines Packungselementes zu verstehen, z.B. Füllkörperschüttung, Gitterpackung, gefaltete Oberfläche u.a.
- Als Leitelement für Flüssigkeit wird ein im allgemeinen zylindrisches Element mit dem Durchmesser der Kolonne bezeichnet, dessen Hauptaufgabe das Leiten der flüssigen Phase in der Kolonne ist, d.h. die Erzeugung einer geordneten, spezifischen Flüssigkeitsverteilung nach dessen Durchströmung, mitunter einer gewollten, systematischen Maldistribution. Im Gegensatz dazu besteht die vorwiegende Aufgabe eines Packungselementes in der Schaffung einer möglichst grossen Stoffaustauschfläche und der Aufrechterhaltung einer gleichmässig verteilten Flüssigkeits- und Dampfströmung.
- Korrekturelement ist ein Element zum Korrigieren der systematischen Maldistribution der durch die Kolonne hindurch strömenden flüssigen Phase durch die Erzeugung einer spezifischen Flüssigkeitsendverteilung resp. einer gewollten systematischen Maldistribution; es kann aus einem Packungsblock oder aus einem Leitelement für Flüssigkeit bestehen.
- Als Packungsbett wird eine Abfolge aus mindestens einem Packungsblock und wahlweise weiteren übereinander angeordneten Packungsblöcken und/oder Korrekturelementen bezeichnet, die nicht von einem Flüssigkeitssammler unterbrochen ist. Somit kann ein Packungsbett Packungsblöcke von unterschiedlichem Packungstyp und Leitelemente für Flüssigkeit aufweisen.
- Mit Kolonneneinbauten wird eine Abfolge aus einem oder mehreren übereinander angeordneten Packungsbetten bezeichnet.

Bei einer besonders bevorzugten Ausführungsform der vorliegenden Erfindung besteht das dem ersten Packungsblock zugeordnete Korrekturelement aus einem weiteren Packungsblock, wobei der erste Packungsblock und der weitere Packungsblock des Korrekturelementes von unterschiedlichem Packungstyp sind. Diese Ausführungsform der Erfindung zeichnet sich dadurch aus, dass das ganze Packungsbett für den Stoffaustausch geeignet und ausgelegt ist, mitunter keine unproduktive Höhe für Korrekturelemente verschwendet wird. Im Vergleich zum Leitelement für Flüssigkeit hat diese Ausführungsform auch deutliche Kostenvorteile. Bevorzugterweise sind der erste. Packungsblock und der weitere Packungsblock des zugeordneten Korrekturelementes im Hinblick auf ihren Packungstyp so ausgewählt, dass sich beim einen der beiden Packungsblöcke eine Randgängigkeit und beim anderen eine Randverarmung der Flüssigkeitsströmung einstellt: also zwei gegenläufige, spezielle Formen der systematischen Maldistribution. Dies ist beispielsweise dann der Fall, wenn für den ersten Packungsblock Packungselemente vom Typ Gitterpackung und für den weiteren Packungsblock des zugeordneten Korrekturelementes Packungselemente vom Typ gefaltete Oberfläche bzw. Füllkörperschüttung oder umgekehrt ausgewählt werden.

Vorzugsweise übertrifft die Gesamthöhe der Packungsblöcke vom Typ des ersten Packungsblocks (Hauptpackungsteil) jene der Packungsblöcke vom Typ des weiteren Packungsblocks (Korrekturpackungsteil) deutlich. Diese Ausführungsform der vorliegenden Erfindung erweist sich besonders dann als vorteilhaft, wenn der Packungstyp des Korrekturpackungsteils gegenüber dem Packungstyp des Hauptpackungsteils Nachteile aufweist, zum Beispiel in Bezug auf die Fertigungskosten oder in Bezug auf die Effizienz in der Trennleistung. Die Nachteile des Korrekturpackungsteils wirken sich bei einer im Vergleich zum Hauptpackungsteil kleineren Gesamthöhe des Korrekturpackungsteils weniger stark auf das gesamte Packungsbett aus. Allerdings muss die Gesamthöhe des Korrekturpackungsteils und dessen Anordnung im Hauptpackungsteil so gewählt werden, dass die sich ausbildende systematische Maldistribution möglichst weitgehend kompensiert wird. Bei einer bevorzugten Ausführungsform der vorliegenden Erfindung weist der Hauptpackungsteil mindestens die dreifache Höhe des Korrekturpackungsteils auf; besonders bevorzugt wird jedoch die sechs- bis zehnfache Höhe des Korrekturpackungsteils, wobei bei hohen Packungsbetten der Hauptpackungsteil durch mehrere Blöcke der Korrekturpackung unterteilt ist.

Bei einer besonders bevorzugten Ausführungsform der vorliegenden Erfindung ist der Hauptpackungsteil vom Typ Gitterpackung und der Korrekturpackungsteil vom Typ gefaltete Oberfläche, da in diesem Falle beides strukturierte Packungstypen sind. Dies führt zum Beispiel bei Anwendungen in einer Rektifikationskolonne zu einer hohen Trennleistung und zu einem hohen Durchsatz. Diese Ausführungsform der vorliegenden Erfindung erweist sich auch im Hinblick auf die Gas- bzw. Dampfströmung als besonders vorteilhaft, da einerseits Packungsblöcke vom Typ Gitterpackung (wie auch solche vom Typ Füllkörperschüttung) zu einer Vergleichmässigung der Gasströmung führen und somit als Gleichrichter für die Gasströmung wirken und andrerseits Packungsblöcke vom Typ gefaltete Oberfläche die Mischwirkung in der Gasströmung erhöhen. Dadurch wird die schädliche Auswirkung der Maldistribution auf die Trennleistung ebenfalls vermindert.

Es wird weiter bevorzugt, dass der erste Packungsblock und sein zugeordnetes Korrekturelement im wesentlichen die gleiche hydraulische Kapazität (ausgedrückt als Flutpunkt oder Flutgrenze) aufweisen, damit die hydraulische Kapazität des gesamten Packungsbettes nicht durch diejenige des Korrekturelementes begrenzt wird. Aus ähnlichen Gründen ist es vorteilhaft, wenn im Falle der Ausführungsform mit Hauptpackungsteil und Korrekturpackungsteil bei Anwendungen für Rektifikations- oder Absorptionskolonnen die Eigenschaften des Korrekturpackungsteils in Bezug auf Trennleistung und Druckverlust nicht bedeutend von denjenigen des Hauptpackungsteils abweichen. Bei der oben erwähnten besonders bevorzugten Ausführungsform hat der Korrekturpackungsteil deshalb etwa die gleiche spezifische Packungsoberfläche (d.h. etwa die gleiche Packungsdichte) wie der Hauptpackungsteil.

Bei einer weiteren bevorzugten Ausführungsform der vorliegenden Erfindung besteht mindestens einer der ersten und/oder weiteren Packungsblöcke aus Packungselementen von der Art, die durch ihre Struktur der Gas- bzw. Dampfströmung und/oder der Flüssigkeitsströmung eine in der horizontalen Querschnittprojektion der Kolonne erkennbare Vorzugsrichtung aufprägt, wobei die Packungselemente dieses Blocks in vertikaler Abfolge um einen Winkel um die Kolonnenachse gegeneinander verdreht angeordnet sind. Bei der weiter oben erwähnten besonders bevorzugten Ausführungsform der vorliegenden Erfindung mit einem Hauptpackungsteil vom Typ Gitterpackung und einem Korrekturpackungsteil vom Typ gefaltete Oberfläche bestehen die Packungsblöcke jeweils aus Teilblöcken von zwei Packungselementen, die vorzugsweise um 90° um die Kolonnenachse gegeneinander verdreht angeordnet sind.

Eine weitere, vor allem in Bezug auf Investitionskosten attraktive Ausführungsform ist die Kombination von Füllkörperschüttung als Hauptpackungsteil mit Gitterpackung als Korrekturpackungsteil. Dies erlaubt vor allem bei einfachen Trennproblemen oder auch bei verschmutzenden, Feststoffe enthaltenden Flüssigkeiten die Verwendung von Füllkörpern selbst bei grossen Kolonnendurchmessern und erhöhten Packungsbetten.

Neben den oben erwähnten Ausführungsformen der vorliegenden Erfindung sind je nach Anwendung weitere vorteilhafte Sandwich-Kombinationen von Packungsblöcken verschiedenen Packungstyps möglich, um durch geeignete Kombinationen der unterschiedlichen Flüssigkeitsendverteilungen der einzelnen Packungstypen die durch die Packungsblöcke bewirkte systematische Maldistribution der Flüssigkeit zu vermindern. Erwähnenswert sind insbesondere auch die abwechselnden Folgen von jeweils zwei Packungselementen vom Typ Gitterpackung und zwei Packungselementen vom Typ gefaltete Oberfläche mit ungefähr gleicher Höhe. Letztendlich ist es auch denkbar, abwechselnde Folgen von nur je einem Packungselement einzusetzen. Dies ist dann angezeigt, wenn die in Bezug auf die Flüssigkeitsendverteilung verschiedenen Packungstypen praktisch gleiche Leistungswerte in Bezug auf Trennleistung, Druckverlust und Kapazität aufweisen.

Die nachfolgende detaillierte Beschreibung dient in Verbindung mit den beiliegenden Zeichnungen nur als Beispiel für ein besseres Verständnis der Erfindung und ist nicht als Einschränkung des Schutzbereichs der vorliegenden Erfindung, wie sie in den Patentansprüchen definiert wird, aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen eine Stoffaustauschkolonne nach dem bekannten Stand der Technik und bevorzugte Ausführungsformen der vorliegenden Erfindung dar. Es zeigt:
- Fig. 1: Stoffaustauschkolonne nach dem bekannten Stand der Technik;
- Fig. 2a: schematische Darstellung der Flüssigkeitsbelastung entlang eines Kolonnendurchmessers bei verschiedenen Packungstypen in Diagrammform (charakteristische Flüssigkeitsendverteilung resp. systematische Maldistribution);
- Fig. 2b: Darstellung einer stochastischen Flüssigkeitsendverteilung entlang eines Kolonnendurchmessers
- Fig. 3: Teilansicht von Einbauten für Stoffaustauschkolonne gemäss einer besonders bevorzugten Ausführungsform der vorliegenden Erfindung, bestehend aus einem Hauptpackungsteil vom Typ Gitterpackung und einem Korrekturpackungsteil vom Typ gefaltete Oberfläche;
- Fig. 4: Einbauten für Stoffaustauschkolonne gemäss einer anderen Ausführungsform der vorliegenden Erfindung, bestehend aus einer abwechselnden Folge von jeweils zwei Packungselementen vom Typ Gitterpackung und zwei Packungselementen vom Typ gefaltete Oberfläche mit gleicher Höhe;
- Fig. 5: Teilansicht von Einbauten für Stoffaustauschkolonne gemäss einer weiteren bevorzugten Ausführungsform der vorliegenden Erfindung, bestehend aus einem Hauptpackungsteil vom Typ Füllkörperschüttung und einem Korrekturpackungsteil vom Typ Gitterpackung.

Grundsätzlich sind in den Figuren gleiche Teile mit gleichen Bezugszeichen versehen.

### Detaillierte Beschreibung der Erfindung

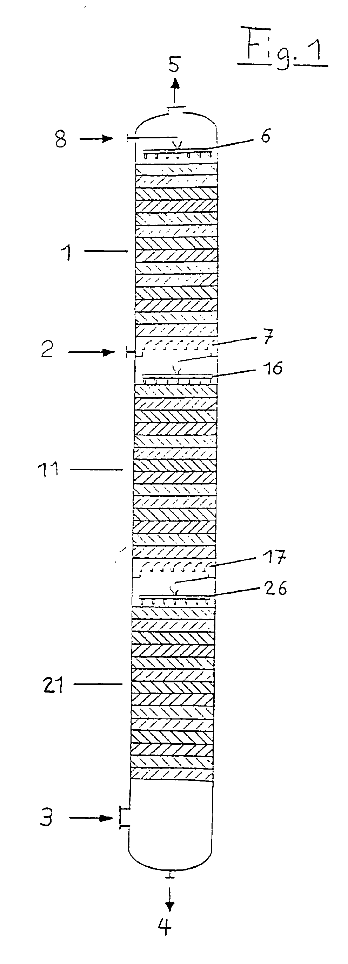

Die Figur 1 zeigt eine für die Destillation resp. Rektifikation geeignete Stoffaustauschkolonne - d.h. eine Destillationskolonne - mit in Packungsbetten 1, 11, 21 unterteilten Kolonneneinbauten nach dem bekannten Stand der Technik. Im Falle von strukturierten Packungen bestehen die Packungsbetten 1, 11, 21 aus übereinander angeordneten einzelnen Packungselementen. Durch den Flüssigkeitszulauf 2 hindurch wird die zu trennende Flüssigkeit in die Destillationskolonne hinein zugeführt. Der Zulauf wird zusammen mit der aus dem darüber liegenden Packungsbett 1 ablaufenden Flüssigkeit mittels eines Flüssigkeitsverteilers 16 gleichmässig über den Querschnitt der Kolonne respektive deren Packungsbett 11 verteilt. Die Flüssigkeit strömt durch die Packungsbetten 11, 21 im Kolonneninnenraum hindurch nach unten in Richtung Flüssigkeitsablauf 4, durch welchen hindurch die Flüssigkeit, angereichert mit den schwerersiedenden Komponenten aus der Destillationskolonne, als Sumpfprodukt abfliesst. In den Packungsbetten 11, 21 kommt die flüssige Phase in eine innige Berührung mit einer gas- bzw. dampfförmigen Phase, welche durch die Verdampfung eines Teiles des Sumpfproduktes erzeugt wird und durch den Gas- bzw. Dampfzufluss 3 hindurch in die Kolonne hinein, durch die Packungsbetten 21, 11, 1 hindurch nach oben und durch den Gas- bzw. Dampfabfluss 5 hindurch aus der Kolonne heraus strömt, angereichert mit den Leichtsiedern. Bei der Rektifikation wird ein Teil der durch den Gas- bzw. Dampfabfluss 5 hindurch ausströmenden Kopfprodukte kondensiert und als Rücklauf 8 erneut in den Kolonneninnenraum hinein geführt, wo sie mittels eines Flüssigkeitsverteilers 6 gleichmässig über den Querschnitt des Packungsbettes 1 verteilt werden und durch das Packungsbett 1 hindurch nach unten strömen.

Als Abhilfe gegen die durch die Packung bewirkte. Maldistribution, insbesondere der systematischen, sowie zur Verteilung des Zulaufes 2 sind die Einbauten der Kolonne in mehrere Packungsbetten 1, 11, 21 unterteilt. Am unteren Ende von jedem Packungsbett 1, 11 (ausser dem untersten) wird die Flüssigkeit von einem Flüssigkeitssammler 7, 17 gesammelt und über einen Flüssigkeitsverteiler 16, 26 erneut gleichmässig über den Querschnitt der Kolonne respektive der Packungsbetten 11 und 21 verteilt, damit wenigstens am oberen Ende des folgenden Packungsbettes 11 und 21 erneut eine für die Destillation optimale gleichmässige Flüssigkeitsverteilung vorliegt.

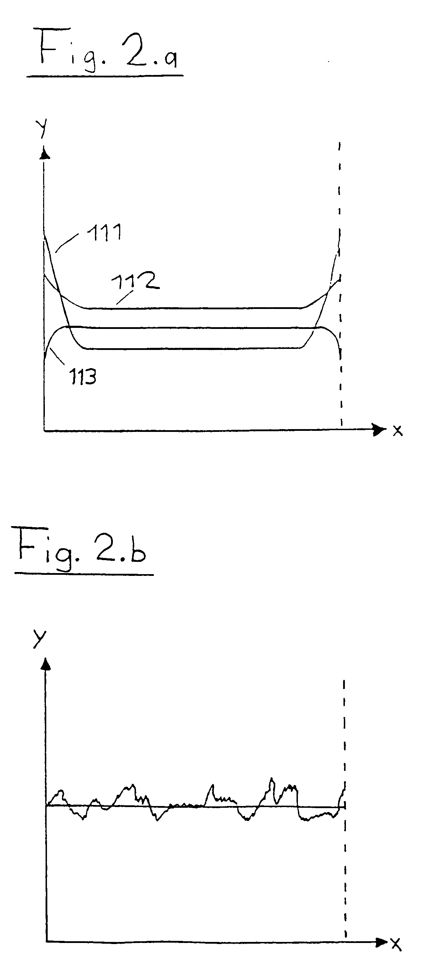

Sobald die Flüssigkeit eine gewisse Strecke im Packungsbett 1, 11, 21 unterhalb des Flüssigkeitsverteilers 6, 16, 26 zurückgelegt hat, ist sie aufgrund der Wirkung des Packungsbettes 1, 11, 21 nicht mehr vollkommen gleichmässig über den Kolonnenquerschnitt verteilt, was sich negativ auf die Trennleistung der Destillationskolonne auswirkt. Dieses Phänomen der Maldistribution ist für verschiedene Packungstypen schematisch in den Figuren 2a und 2b dargestellt. In den Diagrammen der Figuren 2a und 2b ist in y-Richtung die örtliche Flüssigkeitsbelastung entlang eines Durchmessers (in x-Richtung aufgetragen) durch eine Stoffaustauschkolonne aufgetragen. Die Diagramme der Figur 2a zeigen die weiter oben erwähnte, für die jeweilige Kolonnenpackung charakteristische Endverteilung resp. systematische Maldistribution. Die Kurve 111 zeigt das typische Diagramm für ein Packungsbett vom Typ Füllkörperschüttung, die Kurve 112 das Diagramm für ein Packungsbett vom Typ gefaltete Oberfläche und die Kurve 113 das Diagramm für ein Packungsbett vom Typ Gitterpackung. Aus den Diagrammen 111 und 112 ist ersichtlich, dass sich die systematische Maldistribution von Flüssigkeit bei Packungsbetten vom Typ Füllkörperschüttung und gefaltete Oberfläche in Form einer Randgängigkeit manifestiert, wobei die Randgängigkeit beim Typ Füllkörperschüttung sehr viel ausgeprägter ist als jene beim Typ gefaltete Oberfläche. Aus dem Diagramm 113 sieht man, dass sich die systematische Maldistribution von Flüssigkeit bei Packungsbetten vom Typ Gitterpackung in Form einer Randverarmung manifestiert. Bei geeigneter Wahl der Packungshöhe entspricht das Ausmass der Randverarmung ungefähr dem Ausmass (mit umgekehrtem Vorzeichen) der Randgängigkeit beim Typ gefaltete Oberfläche. Figur 2b zeigt in analoger Form eine stochastische Maldistribution. Es wird aus der Darstellung unmittelbar ersichtlich, dass bei Mittelung der Flüssigkeitsbelastung über grössere Teilbereiche eine gleichmässige Verteilung resultiert.

Bei der in der Figur 3 dargestellten Teilansicht eines Packungsbettes 201 gemäss einer besonders bevorzugten Ausführungsform der vorliegenden Erfindung werden die aus der Figur 2a erkennbaren Eigenschaften von Packungen des Typs Gitterpackung und des Typs gefaltete Oberfläche ausgenutzt. Das Packungsbett 201 gemäss dieser Ausführungsform der Erfindung besteht aus einem ersten Packungsblock 208 vom Typ Gitterpackung, gefolgt von einem Packungsblock 209 vom Typ gefaltete Oberfläche, einem Packungsblock 218 vom Typ Gitterpackung, einem Packungsblock 219 vom Typ gefaltete Oberfläche und einem Packungsblock 228 vom Typ Gitterpackung. Das Packungsbett 201 ist also mitunter eine Folge von drei Packungsblöcken (208, 218, 228) vom Typ Gitterpackung (Hauptpackungsteil) und zwei dazwischen angeordneten Packungsblöcken (209, 219) vom Typ gefaltete Oberfläche (Korrekturpackungsteil).

Die Packungsblöcke 209, 219 vom Typ gefaltete Oberfläche des Korrekturpackungsteils bestehen aus je zwei Packungselementen pro Packungsblock, die um 90° um die Kolonnenachse gegeneinander verdreht angeordnet sind. Bei der in der Figur 3 dargestellten Destillationskolonne hat der Korrekturpackungsteil etwa die gleiche spezifische Packungsoberfläche (d.h. etwa die gleiche Packungsdichte) wie der Hauptpackungsteil. Des weiteren hat der Korrekturpackungsteil in etwa die gleiche hydraulische Kapazität (ausgedrückt als Flutpunkt oder Flutgrenze) wie der Hauptpackungsteil. Der Hauptpackungsteil weist mindestens die dreifache Höhe des Korrekturpackungsteils auf; bevorzugt jedoch die sechs- bis zehnfache Höhe.

Aufgrund der aus der Figur 2a erkennbaren Flüssigkeitsendverteilungen kompensieren sich die durch den Hauptpackungsteil und den Korrekturpackungsteil verursachten systematischen Maldistributionen der Flüssigkeit weitgehend. Bei Versuchen mit einer Destillationskolonne gemäss dieser bevorzugten Ausführungsform der Erfindung wurden Trennleistungen von deutlich über 30 theoretischen Trennstufen für ein Packungsbett erreicht. Mit dieser erfindungsgemässen Anordnung können also hohe Betthöhen mit hoher Trennstufenzahl realisiert werden, die nach dem Stand der Technik mit Hilfe von Flüssigkeitssammlern und -verteilern zusätzlich unterteilt werden mussten (s. Fig. 1, untere zwei Packungsbetten).

Bei einem weiteren Versuch mit einer Destillationskolonne gemäss der Figur 3 wurde die Trennleistung eines Packungsbettes der Höhe 3.5 m ohne Korrekturpackungsteil mit derjenigen eines Packungsbettes der Höhe 7.5 m verglichen, dies einmal mit einer Anordnung gemäss der Figur 3 und einmal mit einer analogen Anordnung, bei der jedoch anstelle von Packungselementen des Typs gefaltete Oberfläche weitere Packungselemente des Typs Gitterpackung eingesetzt waren, so dass die Packung anstatt aus einem Hauptpackungsteil und einem Korrekturpackungsteil nur aus einem einzigen Hauptpackungsteil bestand. Der Versuch zeigte, dass ohne Korrekturpackungsteil die Trennleistung pro Betthöhe beim Packungsbett mit 7.5 m Höhe im Vergleich zum Packungsbett mit 3.5 m Höhe deutlich abnahm, während sie mit Korrekturpackungsteil annähernd unverändert blieb resp. nur leicht abnahm.

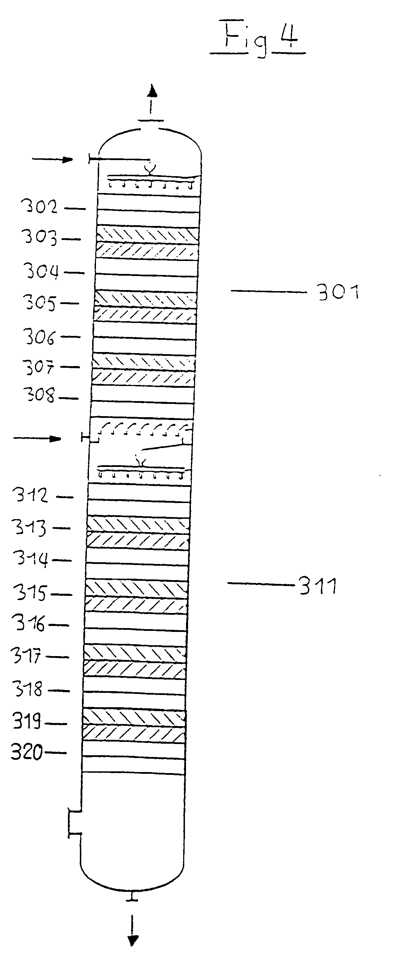

Eine Stoffaustauschkolonne gemäss einer anderen bevorzugten Ausführungsform der vorliegenden Erfindung ist in der Figur 4 dargestellt. Die Packungsbetten 301, 311 bestehen je aus einer abwechselnden Folge von jeweils einem ersten Packungsblock 302, 312 aus zwei Packungselementen vom Typ Gitterpackung, einem zugeordneten Korrekturelement 303, 313 bestehend aus zwei Packungselementen vom Typ gefaltete Oberfläche mit ungefähr gleicher Höhe wie die Elemente der ersten Packungsblöcke 302, 312, gefolgt von Packungsblöcken 304 - 308, 314 - 320, abwechslungsweise jeweils vom Typ Gitterpackung und gefaltete Oberfläche.

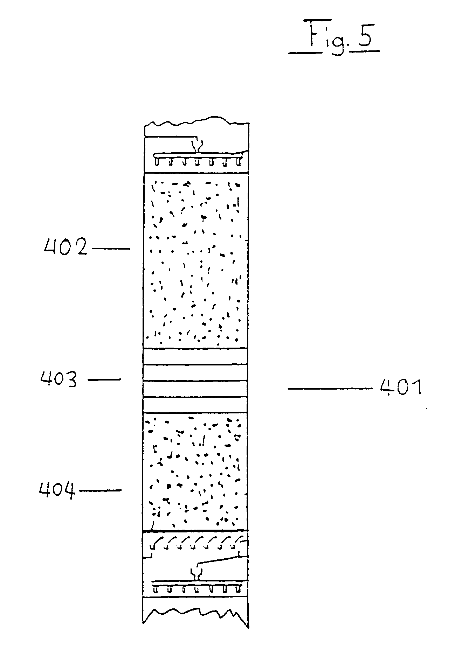

Die Stoffaustauschkolonne gemäss der in Figur 5 dargestellten Ausführungsform der Erfindung hat ein Packungsbett 401 bestehend aus einem ersten Packungsblock 402 des Hauptpackungsteils vom Typ Füllkörperschüttung, einem weiteren Packungsblock 403 des Korrekturpackungsteils vom Typ Gitterpackung und einem dritten Packungsblock 404 des Hauptpackungsteils vom Typ Füllkörperschüttung. Die Investitionskosten für ein Packungsbett 401 gemäss der hier dargestellten Ausführungsform der Erfindung sind wesentlich kleiner als diejenigen für ein Packungsbett 201, weil nur der vergleichsweise kleine Korrekturpackungsteil 403 aus relativ teuren Packungselementen vom Typ Gitterpackung besteht, während der viel grössere Hauptpackungsteil 402, 404 aus kostengünstigen Füllkörperschüttungen besteht.

Zusammenfassend ist festzustellen, dass die Erfindung Einbauten für Stoffaustauschkolonnen bereitstellt, durch die das bei den bisher bekannten Packungen auftretende Phänomen der systematischen Maldistribution von Flüssigkeit wesentlich unterdrückt wird, mit den erwähnten sich daraus ergebenden Vorteilen.

## Patentansprüche

1. Einbauten für Stoffaustauschkolonnen mit wenigstens einem Packungsbett (201; 301; 401), welches mindestens einen ersten Packungsblock (208; 302; 402) mit Packungselementen eines ersten Packungstyps mit einer ersten systematischen Maldistribution und mindestens ein ihm zugeordnetes Korrekturelement (209; 303; 403) aufweist, **dadurch gekennzeichnet, dass** das mindestens eine, dem ersten Packungsblock (208; 302; 402) zugeordnete Korrekturelement (209; 303; 403) aus mindestens einem weiteren Packungsblock (209; 303; 403) mit Packungselementen eines zweiten Packungstyps mit einer zweiten systematischen Maldistribution besteht, wobei der erste Packungsblock (208; 302; 402) und der weitere Packungsblock (209; 303; 403) von unterschiedlichem Packungstyp sind und der erste und der zweite Packungstyp derart ausgewählt sind, dass durch die systematische Maldistribution des zweiten Packungsblockes die andersartige systematische Maldistribution des zugeordneten ersten Packungsblockes (208; 302; 402) mindestens teilweise korrigiert wird.

2. Einbauten für Stoffaustauschkolonnen nach Anspruch 1, **dadurch gekennzeichnet, dass** der erste Packungsblock (208; 302; 402) und der weitere Packungsblock (209; 303; 403) so ausgewählt sind, dass sich beim einen der beiden Packungsblöcke eine Randgängigkeit und beim anderen eine Randverarmung der Flüssigkeitsströmung einstellt.

3. Einbauten für Stoffaustauschkolonnen nach Anspruch 1 oder 2, **dadurch gekennzeichnet, dass** der erste Packungsblock (208; 302) und der weitere Packungsblock (209; 303) so ausgewählt sind, dass der eine der beiden Packungsblöcke von einem vorwiegend eine Vergleichmässigung in der Gas- resp. Dampfströmung bewirkenden Packungstyp und der andere von einem vorwiegend eine Durchmischung in der Gas- resp. Dampfströmung bewirkenden Packungstyp ist.

4. Einbauten für Stoffaustauschkolonnen nach Anspruch 2 oder 3, **dadurch gekennzeichnet, dass** der erste Packungsblock (208; 302) und der weitere Packungsblock (209; 303) so ausgewählt sind, dass der eine der beiden Packungsblöcke vom Typ Gitterpackung und der andere vom Typ gefaltete Oberfläche ist.

5. Einbauten für Stoffaustauschkolonnen nach Anspruch 3, **dadurch gekennzeichnet, dass** der erste Packungsblock (402) vom Typ Füllkörperschüttung und der weitere Packungsblock (403) vom Typ Gitterpackung ist.

6. Einbauten für Stoffaustauschkolonnen nach einem der Ansprüche 1 bis 5, **dadurch gekennzeichnet, dass** der erste und/oder der weitere Packungsblock (208, 209; 302, 303; 403) aus Packungselementen von der Art besteht, die durch ihre Struktur der Gas- bzw. Dampfströmung und/oder der Flüssigkeitsströmung eine in der horizontalen Querschnittprojektion der Kolonne erkennbare Vorzugsrichtung aufprägt.

7. Einbauten für Stoffaustauschkolonnen nach Anspruch 6, **dadurch gekennzeichnet, dass** die eine Vorzugsrichtung aufprägenden Packungselemente jeweils um 90° um die Kolonnenachse gegeneinander verdreht angeordnet sind.

8. Einbauten für Stoffaustauschkolonnen nach einem der Ansprüche 1 bis 7, **dadurch gekennzeichnet, dass** der erste Packungsblock (208; 302; 402) im Wesentlichen die gleiche hydraulische Kapazität wie sein zugeordnetes Korrekturelement (209; 303; 403) aufweist.

9. Einbauten für Stoffaustauschkolonnen nach Anspruch 1 bis 8, **dadurch gekennzeichnet, dass** ein aus Packungsblöcken (208, 218, 228; 402, 404) vom Packungstyp des ersten Packungsblocks (208; 402) bestehender Hauptpackungsteil eine Packungshöhe aufweist, die mindestens das Dreifache ist einer Packungshöhe eines aus Packungsblöcken (209, 219; 403) vom Packungstyp des weiteren Packungsblocks (209; 403) bestehenden Korrekturpackungsteils.

10. Einbauten für Stoffaustauschkolonnen nach Anspruch 9, **dadurch gekennzeichnet, dass** der Hauptpackungsteil (208, 218, 228; 402, 404) die sechs- bis zehnfache Höhe des Korrekturpackungsteils (209, 219; 403) aufweist.

11. Stoffaustauschkolonne mit Einbauten nach einem der Ansprüche 1 bis 10.

## Claims

1. Fittings for mass transfer columns with at least one packing bed (201; 301; 401) which has at least one first packing block (208; 302; 402) with packing elements of a first type of packing, having a first systematic maldistribution, and at least one correcting element (209; 303; 403) assigned to it, **characterized in that** the at least one correcting element (209; 303; 403) assigned to the first packing block (208; 302; 402) consists of at least one further packing block (209; 303; 403) with packing elements of a second type of packing, having a second systematic maldistribution, the first packing block (208; 302; 402) and the further packing block (209; 303; 403) being of a different type of packing, and the first and the second type of packing being selected in such a way that, as a result of the systematic maldistribution of the second packing block, the other systematic maldistribution of the assigned first packing block (208; 302; 402) is at least partially corrected.

2. Fittings for mass transfer columns according to Claim 1, **characterized in that** the first packing block (208; 302; 402) and the further packing block (209; 303; 403) are selected such that a marginal fluency of the liquid flow is established in one of the two packing blocks and a marginal depletion of the liquid flow is established in the other.

3. Fittings for mass transfer columns according to Claim 1 or 2, **characterized in that** the first packing block (208; 302) and the further packing block (209; 303) are selected such that one of the two packing blocks is of a type of packing predominantly causing equalization in the gas or vapour flow and the other is of a type of packing predominantly causing intermixing in the gas or vapour flow.

4. Fittings for mass transfer columns according to Claim 2 or 3, **characterized in that** the first packing block (208; 302) and the further packing block (209; 303) are selected such that one of the two packing blocks is of the grid-packing type and the other is of the folded-surface type.

5. Fittings for mass transfer columns according to Claim 3, **characterized in that** the first packing block (402) is of the loose-packing type and the further packing block (403) is of the grid-packing type.

6. Fittings for the mass transfer columns according to one of Claims 1 to 5, **characterized in that** the first and/or the further packing block (208, 209; 302, 303; 403) consist/consists of packing elements of the type which by virtue of their structure impart to the gas or vapour flow and/or to the liquid flow a preferential direction which can be seen in the horizontal projection of the cross section of the column.

7. Fittings for mass transfer columns according to Claim 6, **characterized in that** the packing elements imparting a preferential direction are in each case arranged so as to be rotated at 90° with respect to one another about the column axis.

8. Fittings for mass transfer columns according to one of Claims 1 to 7, **characterized in that** the first packing block (208; 302; 402) has essentially the same hydraulic capacity as its assigned correcting element (209; 303; 403).

9. Fittings for mass transfer columns according to Claims 1 to 8, **characterized in that** a main packing part consisting of packing blocks (208, 218, 228; 402, 404) of the type of packing of the first packing block (208; 402) has a packing height which is at least three times a packing height of a correcting-packing part consisting of packing blocks (209, 219; 403) of the type of packing of the further packing block (209; 403).

10. Fittings for mass transfer columns according to Claim 9, **characterized in that** the main packing part (208, 218, 228; 402, 404) has six to ten times the height of the correcting-packing part (209, 219; 403).

11. Mass transfer column having fittings according to one of Claims 1 to 10.

## Revendications

1. Garnissages pour colonnes d'échange de matière, qui présentent au moins un lit de garnissage (201; 301; 401) qui présente au moins un premier bloc d'empilement (208; 302; 402) doté d'éléments d'empilement d'un premier type d'empilement qui présente un premier défaut systématique de répartition et d'au moins un élément de correction (209; 303; 403) qui leur est associé,
**caractérisés en ce que**
le ou les éléments de correction (209; 303; 403) associés au premier bloc d'empilement (208; 302; 402) sont constitués d'au moins un autre bloc d'empilement (209; 303; 403) doté d'éléments d'empilement d'un deuxième type d'empilement qui présente un deuxième défaut systématique de répartition,
**en ce que** le premier bloc d'empilement (208; 302; 402) et l'autre bloc d'empilement (209; 303; 403) sont de types d'empilement différents et
**en ce que** le premier et le deuxième type d'empilement sont sélectionnés de telle sorte que le défaut systématique de répartition du deuxième bloc d'empilement corrige au moins en partie l'autre défaut systématique de répartition du premier bloc d'empilement (208; 302; 402) qui lui est associé.

2. Garnissages pour colonnes d'échange de matière selon la revendication 1, **caractérisés en ce que** le premier bloc d'empilement (208; 302; 402) et l'autre bloc d'empilement (209; 303; 403) sont sélectionnés de telle sorte que l'un des deux blocs d'empilement permet d'établir un passage de l'écoulement de liquide par les bords et l'autre une diminution de l'écoulement de liquide par les bords.

3. Garnissages pour colonnes d'échange de matière selon les revendications 1 ou 2, **caractérisés en ce que** le premier bloc d'empilement (208; 302) et l'autre bloc d'empilement (209; 303) sont sélectionnés de telle sorte que l'un des deux blocs d'empilement est d'un type d'empilement qui a pour effet principal une uniformisation de l'écoulement de gaz ou de vapeur et **en ce que** l'autre est d'un type d'empilement qui a pour effet principal un mélange intime de l'écoulement de gaz ou de vapeur.

4. Garnissages pour colonnes d'échange de matière selon les revendications 2 ou 3, **caractérisés en ce que** le premier bloc d'empilement (208; 302) et l'autre bloc d'empilement (209; 303) sont sélectionnés de telle sorte que l'un des deux blocs d'empilement est du type garnissage en grille et l'autre du type garnissage à surface repliée.

5. Garnissages pour colonnes d'échange de matière selon la revendication 3, **caractérisés en ce que** le premier bloc d'empilement (402) est du type en corps de charge en vrac et l'autre bloc d'empilement (403) du type en empilement de grilles.

6. Garnissages pour colonnes d'échange de matière selon l'une des revendications 1 à 5, **caractérisés en ce que** le premier et/ou l'autre bloc d'empilement (208, 209; 302, 303; 403) sont constitués d'éléments d'empilement d'un type qui, par sa structure, imprime à l'écoulement de gaz ou de vapeur et/ou à l'écoulement de liquide une direction préférentielle visible dans la projection horizontale de la section transversale de la colonne.

7. Garnissages pour colonnes d'échange de matière selon la revendication 6, **caractérisés en ce que** les éléments d'empilement qui impriment une direction préférentielle sont tournés l'un par rapport à l'autre de 90° autour de l'axe de la colonne.

8. Garnissages pour colonnes d'échange de matière selon l'une des revendications 1 à 7, **caractérisés en ce que** le premier bloc d'empilement (208; 302; 402) présente essentiellement la même capacité hydraulique que l'élément de correction (209; 303; 403) qui lui est associé.

9. Garnissages pour colonnes d'échange de matière selon les revendications 1 à 8, **caractérisés en ce que** la hauteur d'empilement d'une partie principale d'empilement constituée de blocs d'empilement (208, 218, 228; 402, 404) du premier type de blocs d'empilement (208; 402) est au moins le triple de celle de la partie d'empilement de correction constituée de blocs d'empilement (209, 219; 403) de l'autre type de blocs d'empilement (209; 403).

10. Garnissages pour colonnes d'échange de matière selon la revendication 9, **caractérisés en ce que** la hauteur de la partie principale d'empilement (208, 218, 228; 402, 404) représente six à dix fois celle de la partie d'empilement de correction (209, 219; 403).

11. Colonnes d'échange de matière dotées de garnissages selon l'une des revendications 1 à 10.
